# EUROPEAN PATENT APPLICATION

(11) **EP 4 424 534 A1**
(43) Date of publication of application: **04.09.2024**
(21) Application number: 24158280.8
(22) Date of filing: 19.02.2024
(51) Int. Cl.: B60H 1/32, F25B 9/00, F25B 9/08, F25B 43/00

(54) **ENERGY MANAGEMENT UNIT**

(30) Priority: 28.02.2023 US 202363487269 P
(71) Applicant: Apple Inc., Cupertino, CA 95014 (US)
(72) Inventor: KAUFHOLD, Paul D., Cupertino, CA 95014 (US); KEARNEY, John M., Cupertino, CA 95014 (US); CONNICK, Kegan J., Cupertino, CA 95014 (US); WALLIN, Nils Fredrik Magnus, Cupertino, CA 95014 (US); WUJEK, Scott, Cupertino, CA 95014 (US); JAIN, Siddharth, Cupertino, CA 95014 (US)
(74) Representative: Lang, Johannes

(57) **Abstract**

An integrated energy management unit includes a housing 106 defining a housing cavity, an accumulator-separator 102 positioned within the housing cavity, an ejector 104 positioned within the housing cavity and in communication with the accumulator-separator, and an internal heat exchanger 103 positioned within the housing cavity and in fluid communication with the accumulator-separator.

## Description

### CROSS-REFERENCE TO RELATED APPLICATIONS

This application claims the benefit of, and priority to, United States Provisional Application No. 63/487,269, filed on February 28, 2023. The contents of the foregoing application are hereby incorporated by reference in their entirety herein for all purposes.

### FIELD

The present disclosure relates generally to the field of energy management.

### BACKGROUND

Energy management systems are often used to heat and/or cool various subsystems. Some energy management systems include an accumulator and a separator to store and separate the liquid and gas phases of a working fluid.

### SUMMARY

One aspect of the disclosure according to an implementation is a vehicle thermal conditioning system. The vehicle thermal conditioning system includes a housing defining a housing cavity, an accumulator-separator positioned within the housing cavity and configured to separate a gaseous phase from a liquid phase of a refrigerant, an ejector positioned within the housing cavity and in fluid communication with the accumulator-separator and configured to lower a temperature or raise a pressure of the refrigerant, and an internal heat exchanger positioned within the housing cavity and in fluid communication with the accumulator-separator, the internal heat exchanger configured to exchange heat between a flow of refrigerant entering the internal heat exchanger and a flow of refrigerant exiting the internal heat exchanger. The accumulator-separator is in fluid communication with an external heat exchanger for exchanging heat between the refrigerant and a flow of air within a cabin of a vehicle.

In some aspects, the ejector extends along a longitudinal axis and the accumulator-separator and the internal heat exchanger are arranged concentrically around the ejector.

In some aspects, the accumulator-separator is concentric about a first longitudinal axis of the housing and the ejector is positioned about a second longitudinal axis of the housing that is parallel to the first longitudinal axis such that the ejector is positioned adjacent to the accumulator-separator within the housing cavity.

In some aspects, the ejector is a first ejector and the vehicle thermal conditioning system includes a second ejector positioned within the housing cavity and in fluid communication with the accumulator-separator.

In some aspects, the accumulator-separator includes a separating component configured to allow vapor passthrough and not permit liquid passthrough.

In some aspects, the external heat exchanger is positioned around an exterior of the housing and in fluid communication with the accumulator-separator. The external heat exchanger is configured to transfer heat from the refrigerant to atmosphere.

In some aspects, the external heat exchanger is positioned adjacent to an end of the housing and in fluid communication with the accumulator-separator. The external heat exchanger is configured to transfer heat from the refrigerant to atmosphere.

In some aspects, the vehicle thermal conditioning system further includes an actuator at least partially positioned within the housing. The actuator is coupled with a valve configured to regulate a flow of the refrigerant through the ejector.

In some aspects, the vehicle thermal conditioning system further includes a control valve positioned within the housing cavity and configured to regulate a flow of the liquid phase of the refrigerant from the accumulator-separator.

In some aspects, the vehicle thermal conditioning system further includes a first control valve and a second control valve positioned within the housing cavity. The first control valve is configured to regulate a first flow of the liquid phase of the refrigerant from the accumulator-separator to a first heat exchanger and the second control valve is configured to regulate a second flow of the liquid phase of the refrigerant from the accumulator-separator to a second heat exchanger.

In some aspects, the first heat exchanger is configured to operate as a gas cooler.

In some aspects, wherein the first heat exchanger is configured to operate as a condenser.

In some aspects, the internal heat exchanger is positioned adjacent to an end of the housing.

In some aspects, the accumulator-separator, the ejector, and the internal heat exchanger are concentrically arranged within the housing cavity around an axis of the housing cavity extending between a first end of the housing cavity and a second end of the housing cavity.

In some aspects, the ejector includes a first ejector and a second ejector is positioned adjacent to the housing cavity.

In some aspects, the first heat exchanger is associated with a first climate control system of a vehicle and the second heat exchanger is associated with a second climate control system of the vehicle.

Another aspect of the disclosure, according to an implementation, is a vehicle refrigeration cycle thermal system. The vehicle refrigeration cycle thermal system includes an integrated energy management unit. The integrated energy management unit includes a housing defining a housing cavity configured to store a refrigerant, an accumulator-separator positioned within the housing cavity and in fluid communication with a first heat exchanger for exchanging heat between the refrigerant and a flow of air within a cabin of a vehicle and a second heat exchanger for exchanging heat between the refrigerant and the flow of air within the cabin of the vehicle, an internal heat exchanger positioned within the housing cavity and in fluid communication with the accumulator-separator, and an ejector positioned within the housing cavity and configured to lower a temperature or raise a pressure of the refrigerant transferred to the accumulator-separator. The vehicle refrigeration cycle thermal system includes a compressor in fluid communication with a vapor outlet line of the accumulator-separator and configured to transfer the refrigerant under pressure, and a valve positioned in a liquid outlet line of the accumulator-separator and configured to regulate a flow of the refrigerant to the second heat exchanger.

In some aspects, the ejector and the accumulator-separator are concentrically arranged within the housing.

In some aspects, the internal heat exchanger is concentrically arranged around an axis extending through the housing.

In some aspects, the internal heat exchanger is positioned adjacent to an end of the housing.

In some aspects, the integrated energy management unit includes a first ejector and a second ejector positioned adjacent to the accumulator-separator within the housing and in fluid communication with the accumulator-separator.

Another aspect of the disclosure, according to an implementation, is a vehicle thermal system. The vehicle thermal system includes a compressor, a pressure vessel defining a vessel cavity, and an accumulator-separator positioned within the vessel cavity and configured to separate a liquid phase of a refrigerant from a gaseous phase of the refrigerant. The accumulator-separator is in fluid communication with a first heat exchanger for exchanging heat between the refrigerant and a flow of air within a cabin of a vehicle and a second heat exchanger for exchanging heat between the refrigerant and the flow of air within the cabin of the vehicle. The vehicle thermal system further includes an ejector positioned within the vessel cavity and configured to lower a temperature or raise a pressure of the refrigerant, an internal heat exchanger positioned within the vessel cavity and in fluid communication with the accumulator-separator and configured to exchange heat between a flow of refrigerant entering the internal heat exchanger from the first heat exchanger and a flow of refrigerant exiting the internal heat exchanger and directed to the first heat exchanger, a first ejector supply line that supplies the refrigerant from the first heat exchanger to the ejector, a second ejector supply line that supplies the refrigerant from the second heat exchanger to the ejector, a gas cooler supply line that supplies the refrigerant from the compressor to the first heat exchanger, an evaporator supply line that supplies the refrigerant from the accumulator-separator to the second heat exchanger, and a compressor supply line that supplies the refrigerant from the accumulator-separator to the compressor.

In some aspects, the vehicle thermal system further includes a control valve positioned within the vessel cavity and configured to meter a flow of the refrigerant within the evaporator supply line.

In some aspects, the accumulator-separator, the ejector, and the internal heat exchanger are concentrically arranged within the vessel cavity around an axis of the vessel cavity extending between a first end of the vessel cavity and a second end of the vessel cavity.

In some aspects, the vehicle thermal system further includes a heat exchanger positioned adjacent to an external surface of the pressure vessel and configured to transfer heat between the refrigerant and the flow of air within the cabin of the vehicle.

In some aspects, the ejector includes a first ejector and a second ejector positioned within the vessel cavity.

### BRIEF DESCRIPTION OF THE DRAWINGS

FIG. 1 is a schematic illustration of a vehicle that includes a refrigeration cycle thermal system.
FIG. 2 is a schematic illustration of a refrigeration cycle thermal system, according to a first implementation.
FIG. 3 is a schematic illustration of a refrigeration cycle thermal system, according to a second implementation.
FIG. 4 is a schematic cross-sectional illustration of an integrated energy management unit of a refrigeration cycle thermal system, according to a first implementation.
FIG. 5 is a schematic illustration of an integrated energy management unit of a refrigeration cycle thermal system, according to a second implementation.
FIG. 6 is a schematic illustration of an integrated energy management unit of a refrigeration cycle thermal system, according to a third implementation.
FIG. 7 is a schematic illustration of an integrated energy management unit of a refrigeration cycle thermal system, according to a fourth implementation.
FIG. 8 is a schematic illustration of an integrated energy management unit of a refrigeration cycle thermal system, according to a fifth implementation.
FIG. 9 is a schematic illustration of an integrated energy management unit of a refrigeration cycle thermal system, according to a sixth implementation.
FIG. 10 is a schematic illustration of an integrated energy management unit of a refrigeration cycle thermal system, according to a seventh implementation.
FIG. 11 is a schematic illustration of an integrated energy management unit of a refrigeration cycle thermal system, according to an eighth implementation.
FIG. 12 is a schematic illustration of an integrated energy management unit of a refrigeration cycle thermal system, according to a ninth implementation.
FIG. 13 is a schematic illustration of an integrated energy management unit of a refrigeration cycle thermal system, according to a tenth implementation.
FIG. 14 is a schematic illustration of an integrated energy management unit of a refrigeration cycle thermal system, according to an eleventh implementation.
FIG. 15 is a schematic block diagram of a control system for a refrigeration cycle thermal system, according to an implementation.

### DETAILED DESCRIPTION

The disclosure herein relates to refrigeration cycle thermal systems for use in vehicle applications, such as heating and/or cooling a passenger compartment and heating and/or cooling vehicle subsystems and components. The exemplary refrigeration cycle thermal systems discussed with respect to the related figures include an integrated energy management unit that combines the operations of an accumulator, a separator, an ejector, and an internal heat exchanger to reduce the number of fluid lines and connections within the thermal system and consolidate multiple components into a single package to improve packaging considerations.

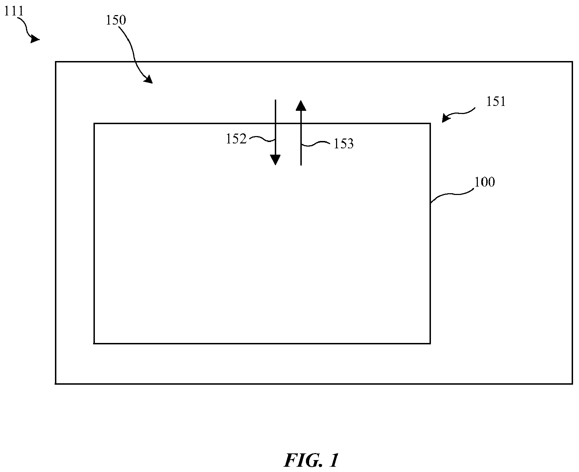

FIG. 1 is a schematic illustration of a vehicle 111. The vehicle 111 defines a passenger cabin 150. The vehicle 111 includes a vehicle climate control system 151 located within the passenger cabin 150. The vehicle climate control system 151 includes a refrigeration cycle thermal system 100. Air is circulated through the passenger cabin 150 as illustrated by the arrow 152 and the arrow 153. The air exchanges heat with a refrigerant of the refrigeration cycle thermal system 100, as discussed herein.

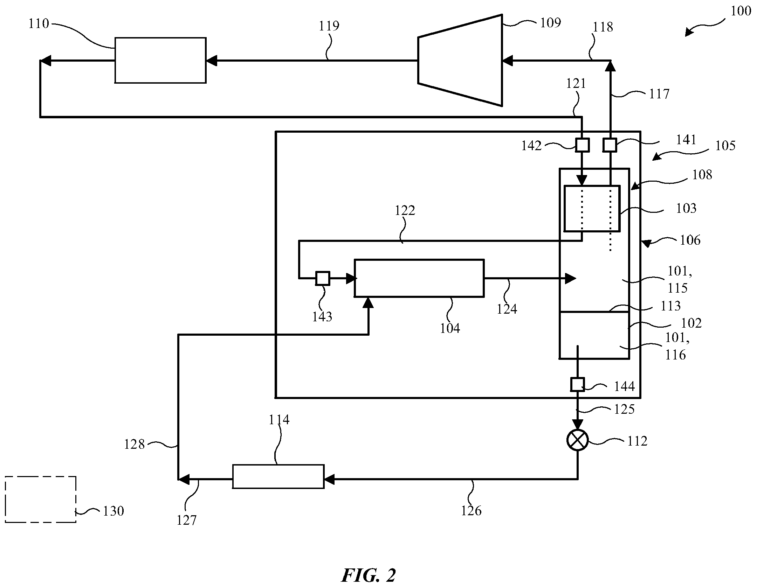

FIG. 2 is a schematic illustration of a refrigeration cycle thermal system 100, according to a first implementation. The refrigeration cycle thermal system 100 uses a vapor-compression refrigeration cycle in which a refrigerant 101 is circulated through the refrigeration cycle thermal system 100 to provide heating and/or cooling for applications including battery cooling, actuator cooling, controller or other computing device cooling, and climate control for cabin air flowing through the passenger cabin 150 as part of the vehicle climate control system 151. In various implementations, the refrigeration cycle thermal system 100 is configured to operate using a CO₂-based R744 refrigerant. In other implementations, other refrigerant types may be used.

The refrigeration cycle thermal system 100 includes an accumulator-separator 102 (e.g., a liquid-gas separator, a separator, or an accumulator), an internal heat exchanger 103, and an ejector 104. In various implementations, including the implementation illustrated in FIG. 2, the accumulator-separator 102, the internal heat exchanger 103, and the ejector 104 are components of an integrated energy management unit 105. The integrated energy management unit 105 includes a housing 106 defining an interior space 108 (e.g., a housing cavity). The accumulator-separator 102, the internal heat exchanger 103, and the ejector 104 are positioned within the interior space 108 of the housing 106. As discussed in greater detail herein, positioning the accumulator-separator 102, the internal heat exchanger 103, and the ejector 104 within the housing 106 reduces the number of refrigerant lines and connections between the components, reducing the complexity of the refrigeration cycle thermal system 100 and the amount of the refrigerant 101 needed to circulate through the refrigeration cycle thermal system 100.

The refrigeration cycle thermal system 100 also includes a compressor 109, a gas cooler 110 (e.g., a first heat exchanger), a control valve 112, and an evaporator 114 (e.g., a second heat exchanger). The refrigerant 101 is routed from the integrated energy management unit 105 to the compressor 109 and the gas cooler 110 and back to the integrated energy management unit 105 in a first loop while refrigerant 101 is routed from the integrated energy management unit 105 to the control valve 112 and the evaporator 114 before returning to the integrated energy management unit 105 in a second loop.

The accumulator-separator 102 is configured to store the refrigerant 101 in a gaseous phase and in a liquid phase for use by the refrigeration cycle thermal system 100. In various implementations, the accumulator-separator 102 includes a membrane 113 (e.g., a separating component) to separate the refrigerant 101 in a gaseous phase 115 (i.e., refrigerant predominantly in a gaseous state or phase) from the refrigerant 101 in a liquid phase 116 (i.e., refrigerant predominantly in a liquid state or phase). The membrane 113 is configured to allow vapor passthrough of the refrigerant 101 but not permit liquid passthrough of the refrigerant 101. In various implementations, the membrane 113 divides an internal volume of the accumulator-separator 102 into two different portions. The refrigerant 101 in the gaseous phase 115 is generally on one side of the membrane 113 and the refrigerant 101 in the liquid phase 116 is generally on the other side of the membrane 113. In various implementations, the membrane 113 is a fabric or other materials, such as GORE-TEX9, that permits materials or substances to pass one-way through the membrane. Other separation materials and or structures may be used in other implementations, such as a J-tube structure, for example and without limitation. In various implementations, the accumulator-separator 102 includes other functions such as particle filtration, drying, and metering of liquid (such as oil) and vapor returned to a compressor, such as the compressor 109. In various implementations, the accumulator-separator 102 includes one or more of these functions in addition to separation and storage of the refrigerant 101.

The refrigerant 101 in the gaseous phase 115 that is on one side of the membrane 113 leaves the accumulator-separator 102 via a first accumulator-separator outlet line 117 (e.g., a vapor outlet line). The first accumulator-separator outlet line 117 is a low-pressure vapor outlet line. In various implementations, a first sensor 141 measures a characteristic of the refrigerant 101 flowing through the first accumulator-separator outlet line 117. In various implementations, the measured characteristic is a temperature and/or a pressure of the refrigerant 101. The first sensor 141 is illustrated as positioned within the housing 106. However, in other implementations, the first sensor 141 may be positioned outside of and/or adjacent to the housing 106.

The refrigerant 101 is delivered to the compressor 109 via a compressor supply line 118. The compressor 109 compresses the refrigerant 101 to increase the temperature and pressure of the refrigerant 101 and generate heat. The compressor 109 is configured to transfer the refrigerant 101 under pressure to the gas cooler 110. The heated gaseous phase 115 refrigerant 101 exits the compressor 109 and delivers the coolant to the gas cooler 110 located downstream of the compressor 109 via a gas cooler supply line 119.

The gas cooler 110 is a heat-rejecting component of the refrigeration cycle thermal system 100 in fluid communication with the compressor 109 and with the integrated energy management unit 105. The gas cooler 110 is configured to transfer heat from the refrigerant 101 to fluid or to coolant or to another system or component that is being heated. In various implementations, the gas cooler 110 is a component of the vehicle climate control system 151, and air flowing through the passenger cabin 150 of the vehicle 111 is heated by an exchange of heat with the refrigerant 101. Thus, the gas cooler 110 may be configured to function as a heat exchanger that exchanges heat between the refrigerant 101 and the air flowing through the passenger cabin 150.

The refrigerant 101 exits the gas cooler 110 and is routed through an internal heat exchanger supply line 121 to the internal heat exchanger 103 of the energy management unit 105. The internal heat exchanger supply line 121 is a high-pressure supply line from the gas cooler 110. In various implementations, a second sensor 142 measures a characteristic of the refrigerant 101 flowing through the internal heat exchanger supply line 121. In various implementations, the measured characteristic is a temperature and/or a pressure of the refrigerant 101. The second sensor 142 is illustrated as positioned within the housing 106. However, in other implementations, the second sensor 142 may be positioned outside of and/or adjacent to the housing 106.

The internal heat exchanger 103 receives the refrigerant 101 from the gas cooler 110 and exchanges heat with a flow of the refrigerant 101 leaving the accumulator-separator 102 via the first accumulator-separator outlet line 117. The internal heat exchanger 103 uses the remaining heat of the refrigerant 101 leaving the gas cooler 110 to heat the flow of the refrigerant 101 leaving the accumulator-separator 102 that is directed to the compressor 109. The internal heat exchanger 103 is configured to exchange heat between a flow of refrigerant 101 leaving the gas cooler 110 via the internal heat exchanger supply line 121 and a flow of refrigerant 101 directed to the compressor 109 via the first accumulator-separator outlet line 117 and the compressor supply line 118. The internal heat exchanger 103 is configured to exchange heat between a flow of refrigerant 101 entering the internal heat exchanger 103 at a higher temperature and a flow of refrigerant 101 exiting the internal heat exchanger 103 at a lower temperature to raise a temperature of the refrigerant 101 exiting the internal heat exchanger 103.

A high-pressure ejector supply line 122 (e.g., first ejector supply line) supplies the refrigerant 101 at a high pressure to the ejector 104. Since the ejector 104 is contained within the housing 106 of the integrated energy management unit 105 along with the accumulator-separator 102, the high-pressure ejector supply line 122 is also internal to the integrated energy management unit 105. In various implementations, a third sensor 143 measures a characteristic of the refrigerant 101 flowing through the high-pressure ejector supply line 122. In various implementations, the measured characteristic is a temperature and/or a pressure of the refrigerant 101. The third sensor 143 may be positioned within the housing 106. The refrigerant 101 is directed from the ejector 104 to the accumulator-separator 102 as shown by the ejector outlet line 124.

The refrigeration cycle thermal system 100 also includes a low-pressure refrigerant outlet line 125 (e.g., a liquid outlet line). In various implementations, a fourth sensor 144 measures a characteristic of the refrigerant 101 flowing through the low-pressure refrigerant outlet line 125. In various implementations, the measured characteristic is a temperature and/or a pressure of the refrigerant 101. The fourth sensor 144 may be positioned within the housing 106. However, in other implementations, the fourth sensor 144 may be positioned outside of and/or adjacent to the housing 106. The refrigerant 101 in the liquid phase 116 that is on one side of the membrane 113 leaves the accumulator-separator 102 via the low-pressure refrigerant outlet line 125 and is directed to the control valve 112. The control valve 112 is, in various implementations, an expansion valve that is upstream of the evaporator 114. The control valve 112 is configured to regulate or meter a flow of the refrigerant 101 in the liquid phase 116 from the accumulator-separator 102 to the evaporator 114. In various implementations, the control valve 112 is an electromechanical valve that is in electronic communication with a control system 130 (e.g., a controller) as discussed herein. The refrigeration cycle thermal system 100 may include one or more sensors to monitor the position of the control valve 112 and/or a temperature of the refrigerant 101, for example. After passing through the control valve 112, at least a portion of the refrigerant 101 expands to the gaseous phase with an associated drop in temperature.

The control valve 112 meters the flow of the refrigerant to the evaporator 114 via an evaporator supply line 126. The evaporator 114 is in fluid communication with the low-pressure refrigerant outlet line 125 of the accumulator-separator 102 and is in fluid communication with the ejector 104. The evaporator 114 is cooled by the flow of the refrigerant 101 passing through. The evaporator 114 receives the flow of refrigerant 101 in the liquid phase via the evaporator supply line 126. The flow of refrigerant through the evaporator 114 is configured to absorb heat from the environment, such as a vehicle climate control system 152, to cool or lower a temperature of the vehicle climate control system 152. The refrigerant 101 exits the evaporator 114 via an evaporator outlet line 127 and is directed to the ejector 104 via a low-pressure ejector supply line 128 (e.g., a second ejector supply line) to join the flow of the refrigerant 101 from the high-pressure ejector supply line 122 at the ejector inlet.

The ejector 104 is configured to mix the refrigerant 101 from the evaporator 114 with the refrigerant 101 from the internal heat exchanger 103 and expel the refrigerant 101 to the accumulator-separator 102 via the ejector outlet line 124. The ejector 104 is configured to lower a temperature and raise a pressure of the refrigerant 101 coming from the high-pressure ejector supply line 122. The ejector outlet line 124 is low pressure line to the accumulator-separator 102. When the ejector 104 is incorporated into the integrated energy management unit 105, as shown in FIG. 2, the ejector 104 is configured to expel the refrigerant 101 directly to the accumulator-separator 102.

While FIG. 2 illustrates one configuration and routing of supply and outlet lines between the compressor 109, the gas cooler 110, the integrated energy management unit 105, the control valve 112, and the evaporator 114, it is understood that different configurations and routings may be used depending on the application and/or performance requirements of the refrigeration cycle thermal system 100.

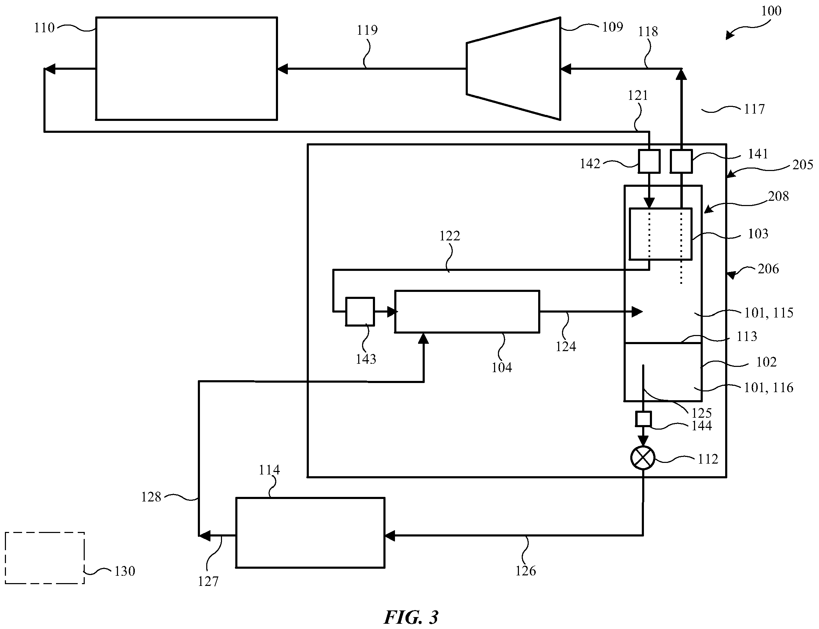

FIG. 3 is a schematic illustration of the refrigeration cycle thermal system 100, according to a second implementation. The refrigeration cycle thermal system 100 illustrated in FIG. 3 is similar to the refrigeration cycle thermal system 100 shown in FIG. 2. However, in this implementation, an integrated energy management unit 205 also includes the control valve 112 positioned within the interior space 208 of the housing 206. With the control valve 112 positioned within the housing 206, the low-pressure refrigerant outlet line 125 is also contained within the housing 206, further reducing the number of lines and connections in the refrigeration cycle thermal system 100.

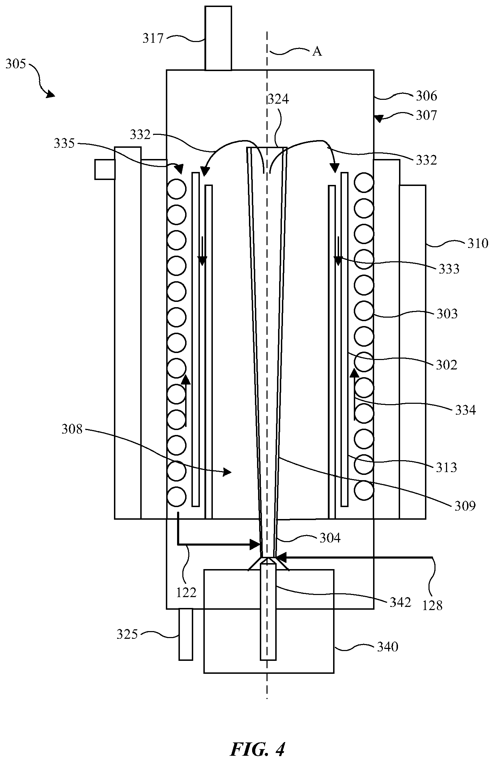

FIGS. 4-13 illustrate various configurations of the integrated energy management unit. FIG. 4 is a schematic cross-sectional illustration of an integrated energy management unit 305 of the refrigeration cycle thermal system 100, according to a first implementation. The integrated energy management unit 305 includes a housing 306. The housing 306 is, in some implementations, a pressure vessel. The housing 306 defines an interior space 308 (e.g., a housing cavity or vessel cavity). In the illustrated implementation, the housing 306 is a cylindrical pressure vessel with an axis A extending from a first end of the housing 306 to the second end of the housing 306.

An accumulator-separator 302 is positioned within the interior space 308 of the housing 306. The accumulator-separator 302 is generally concentrically oriented around the axis A of the housing 306. In various implementations, the accumulator-separator 302 includes one or more membranes 313 that permit a one-way transmission of material through the membrane, such as permitting gaseous transfer through the membrane 313 while preventing liquid transfer through the membrane 313. The integrated energy management unit 305 also includes the internal heat exchanger 303. In the illustrated implementation, the internal heat exchanger 303 is a spiral or helix of coils extending around the accumulator-separator 302.

An ejector 304 is positioned within the housing 306. The ejector 304 has a generally annular structure 309 (e.g., an ejector body) that is arranged around and along the axis A. The axis A is a generally longitudinal axis extending through the housing 306 between a first end and a second end of the housing 306. The ejector 304 extends along the axis A within the housing 306. The accumulator-separator 302 and the internal heat exchanger 303 are concentrically arranged around the ejector 304 and around the axis A extending through the housing 306. Similar to the ejector 104 discussed with respect to FIG. 2, the ejector 304 is configured to mix the refrigerant 101 from an evaporator, such as the evaporator 114, with the refrigerant 101 from the internal heat exchanger 303 and expel the refrigerant 101 to the accumulator-separator 302. A first inlet is configured to receive high-pressure refrigerant 101 from the internal heat exchanger 303 via the high-pressure ejector supply line 122. A second inlet is configured to receive low-pressure refrigerant 101 from an evaporator via the low-pressure ejector supply line 128. By positioning the ejector 304 within the accumulator-separator 302, a diameter of the ejector 304 can be enlarged, improving the entrainment of the ejector 304 (e.g., the mixture of the two input streams of refrigerant 101 within the ejector 304).

The ejector 304 includes an ejector outlet 324 that is configured to expel the refrigerant 101 into the accumulator-separator 302 as shown by the arrows 332. The refrigerant 101 travels through the accumulator-separator 302 and the refrigerant 101 primarily in the liquid phase accumulates near the low-pressure refrigerant outlet line 325 while the refrigerant 101 primarily in the gaseous phase accumulates near the accumulator-separator outlet line 317. The description of the function of the ejector 104 made with respect to FIG. 2 is applicable to the ejector 304.

In some implementations, the integrated energy management unit 305 includes an actuator 340. The actuator 340 is a controllable component of the ejector 304 and is configured to control a variable restrictor of the ejector 304. The actuator 340 is an electrically controlled electric motor or pneumatic actuator that is operable to change a position of a component of the ejector 304 to change a rate of fluid flow through the ejector 304. In the illustrated implementation, the actuator 340 is coupled with a valve 342. The valve 342 may be a needle valve, in some implementations. The actuator 340 is configured to control a position of the valve 342 to regulate a flow of the refrigerant 101 through the ejector 304. The valve 342 directly controls the flow rate of one of the two inlet streams of refrigerant 101 to the ejector 304, which changes the amount of refrigerant 101 that enters the second inlet due to the suction applied to the second inlet by the first stream of refrigerant 101. The actuator 340 is in electronic communication with a control system, such as the control system 130, and is configured to receive one or more control signals from the control system 130 to affect the flow rate through the ejector 304 by adjusting the position of the valve 342.

In some implementations, the actuator 340 is at least partially positioned within the housing 306. By positioning at least a portion of the actuator 340 within the housing 306, the size of the actuator 340 can be smaller and the integrated energy management unit 305 is more compact to enable easier packaging in various applications.

The integrated energy management unit 305 also includes a gas cooler 310. The gas cooler 310 is arranged around an external surface 307 of the housing 306. In various implementations, the gas cooler 310 is an external heat exchanger positioned around an exterior of the housing 306 and is in fluid communication with the accumulator-separator 302. In some implementations, the gas cooler 310 is a coil style heat exchanger. In other implementations, the gas cooler 310 is an annular heat exchanger with fins. The gas cooler 310 is similar to the gas cooler 110 discussed with respect to FIG. 2 and receives the refrigerant 101 from a compressor, such as the compressor 109, and transfers heat from the refrigerant 101 to another fluid or to another system or component that is being heated. The refrigerant 101 from the gas cooler 310 returns to the accumulator-separator 302 as shown by the arrow 335 and is routed around the coils of the internal heat exchanger 303 as shown by the arrows 333 and 334 to exchange heat with the refrigerant 101 that leaves the accumulator-separator 302 via the accumulator-separator outlet line 317.

The consolidation of the accumulator-separator 302, the internal heat exchanger 303, and the ejector 304 within the housing 306 eliminates several physical fluid transfer lines between components, such as the high-pressure ejector supply line 122 and the ejector outlet line 124. Instead, these connections and lines can be replaced by brazed connections between the components within the housing 306, for example.

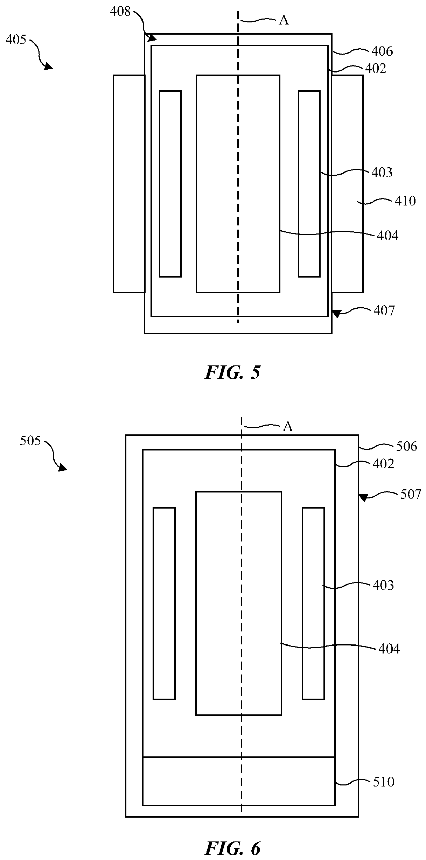

FIG. 5 is a schematic illustration of an integrated energy management unit 405 of the refrigeration cycle thermal system 100, according to a second implementation. The integrated energy management unit 405 includes an accumulator-separator 402 positioned within a housing 406 that defines an internal space 408 (e.g., a cavity). In various implementations, the accumulator-separator 402 is a generally cylindrical vessel or pressure vessel contained within the housing 406. In some implementations, the other components are positioned within the accumulator-separator 402 without the need for the housing 406. The accumulator-separator 402 is similar in function to the accumulator-separator 102 discussed with respect to FIG. 2.

The integrated energy management unit 405 also includes an internal heat exchanger 403. The internal heat exchanger 403 may be positioned within the accumulator-separator 402 or adjacent to the accumulator-separator 402. The internal heat exchanger 403 is positioned generally concentric about the axis A. An ejector 404 is positioned within the housing 406 and in some implementations is positioned within the accumulator-separator 402. The ejector 404 is generally aligned around the axis A. The ejector 404 is similar in function to the ejector 104 and the ejector 304 discussed with respect to FIGS. 2 and 4.

A gas cooler 410 is arranged around an external surface 407 of the housing 406. The gas cooler 410 is similar in function to the gas cooler 110 discussed with respect to FIG. 2. The size and shape of the gas cooler 410 is tied to the diameter and shape of the housing 406.

As discussed with respect to the internal heat exchanger 103, the internal heat exchanger 403 is configured to receive the refrigerant 101 from the gas cooler 410 and exchange heat with the refrigerant 101 leaving the accumulator-separator 402. It is understood that the integrated energy management unit 405 shown in FIG. 5 is connected to other components of the refrigeration cycle thermal system 100 such as the compressor 109 and the evaporator 114.

FIG. 6 is a schematic illustration of an integrated energy management unit 505 of the refrigeration cycle thermal system 100, according to a third implementation. The integrated energy management unit 505 is similar to the integrated energy management unit 405 discussed with respect to FIG. 5 except as described herein.

Instead of arranging a gas cooler around the external surface 507 of the housing 506, a gas cooler 510 is positioned adjacent to an end of the accumulator-separator 402. The gas cooler 510 is an external heat exchanger positioned adjacent to an end of the housing 506 and in fluid communication with the accumulator-separator 402. The gas cooler 510 receives refrigerant 101 directly from the accumulator-separator 402 via an internal fluid connection between the two components. The gas cooler 510 is also in fluid communication with the internal heat exchanger 403 such that the refrigerant 101 moves from the gas cooler 510 to the internal heat exchanger 403 as has been discussed herein. The gas cooler 510 is configured to transfer heat from the refrigerant 101 to the atmosphere or to other components, such as the vehicle climate control system 151 shown in FIG. 2. In this implementation, the size or shape of the gas cooler 510 is not tied to the external diameter or shape of the housing 506.

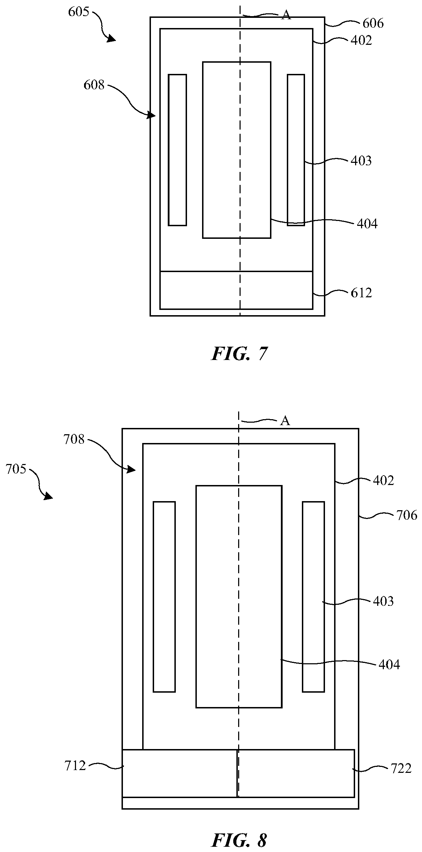

FIG. 7 is a schematic illustration of an integrated energy management unit 605 of the refrigeration cycle thermal system 100, according to a fourth implementation. The integrated energy management unit 605 includes the accumulator-separator 402, the internal heat exchanger 403, and the ejector 404 arranged within an internal space 608 of a housing 606 similar to the arrangement of the components described with respect to FIG. 5. A control valve 612 is included within the housing 606, as discussed with respect to FIG. 3. In this implementation, the control valve 612 is positioned adjacent to a first end of the accumulator-separator 402. The refrigerant 101 in the liquid phase 116 is separated from the refrigerant 101 in the gaseous phase 115 within the accumulator-separator 402 and settles at the first end of the accumulator-separator 402 adjacent to the control valve 612. A brazed connection or other connection is made between the accumulator-separator 402 and the control valve 612 to eliminate a fluid line between the components. The refrigerant 101 is metered through the control valve 612 and transferred to an evaporator, such as the evaporator 114, as discussed with respect to FIG. 2.

FIG. 8 is a schematic illustration of an integrated energy management unit 705 of the refrigeration cycle thermal system 100, according to a fifth implementation. The integrated energy management unit 705 is similar to the integrated energy management unit 605 discussed with respect to FIG. 7 but includes a first control valve 712 and a second control valve 722. Each of the first control valve 712 and the second control valve 722 are positioned within the interior space 708 of the housing 706. The first control valve 712 and the second control valve 722 are both positioned adjacent to the first end of the accumulator-separator 402. The first control valve 712 and the second control valve 722 are, in some implementations, components of a dual climate control system for a vehicle, such as a vehicle having a first climate control system such as the vehicle climate control system 151, and a second climate control system. In various implementations, the first control valve 712 is configured to regulate a first flow of the liquid phase of the refrigerant 101 from the accumulator-separator 402. The first flow of the refrigerant 101 through the first control valve 712 is directed to a first evaporator (e.g., a first heat exchanger) of a first climate control system of a vehicle, in one example. Similarly, the second control valve 722 is configured to regulate a second flow of the liquid phase of the refrigerant 101 from the accumulator-separator 402. The second flow of the refrigerant 101 through the second control valve 722 is directed to a second evaporator (e.g., a second heat exchanger) of a second climate control system of a vehicle. In various implementations, the second flow of the refrigerant 101 through the second control valve 722 to the second evaporator is used to control temperature of a coolant associated with a subsystem, such as a vehicle subsystem, for example and without limitation.

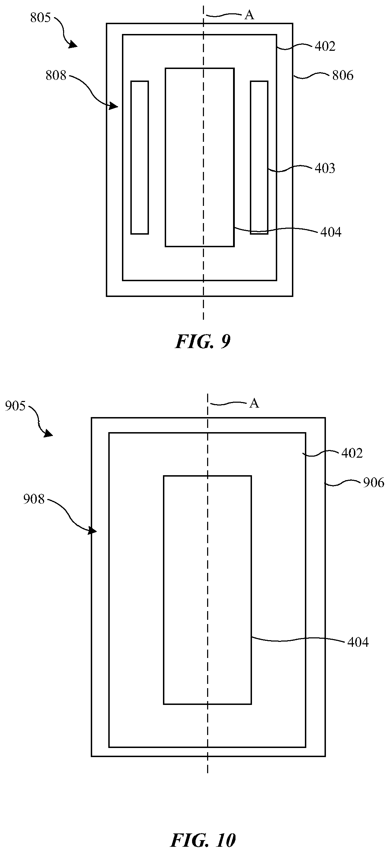

FIG. 9 is a schematic illustration of an integrated energy management unit 805 of the refrigeration cycle thermal system 100, according to a sixth implementation. In this implementation, the internal space 808 of the housing 806 includes the accumulator-separator 402, the internal heat exchanger 403, and the ejector 404 arranged and aligned with the axis A as discussed herein with respect to FIG. 5. The integrated energy management unit 805 can be coupled with the compressor 109, the gas cooler 110, the control valve 112, and the evaporator 114, or other components, as part of the refrigeration cycle thermal system 100 shown in FIG. 2. The integrated energy management unit 805 has a smaller package size than the integrated energy management unit 405, the integrated energy management unit 505, the integrated energy management unit 605, and the integrated energy management unit 705 since the housing 806 can be sized to accommodate the accumulator-separator 402, the internal heat exchanger 403, and the ejector 404 without other components.

FIG. 10 is a schematic illustration of an integrated energy management unit 905 of the refrigeration cycle thermal system 100, according to a seventh implementation. In this implementation, the integrated energy management unit 905 includes only the accumulator-separator 402 and the ejector 404 concentrically arranged and aligned with the axis A within the interior space 908 of the housing 906. The functions normally performed by the internal heat exchanger are performed on the refrigerant 101 outside of the housing 906 of the integrated energy management unit 905.

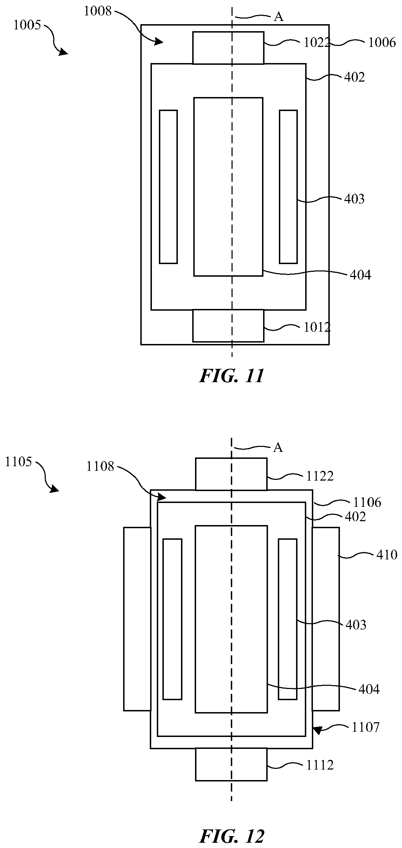

FIG. 11 is a schematic illustration of an integrated energy management unit 1005 of the refrigeration cycle thermal system 100, according to an eighth implementation. The integrated energy management unit 1005 includes the accumulator-separator 402, the internal heat exchanger 403, and the ejector 404 as has been previously described. Included within the housing 1006 and adjacent to a first end of the accumulator-separator 402 is a first control valve 1012. The first control valve 1012 is similar in function to the control valve 112 discussed with respect to FIG. 2 and to the control valve 612 discussed with respect to FIG. 7. The integrated energy management unit 1005 also includes a second control valve 1022 positioned adjacent to a second end of the accumulator-separator 402. The second control valve 1022 is positioned at an opposite end or side of the accumulator-separator 402. The second control valve 1022 is similar in function to the second control valve 722 discussed with respect to FIG. 8. In some implementations, the first control valve 1012 and the second control valve 1022 are coupled to front and rear climate control systems, as discussed with respect to FIG. 8. For some packaging considerations, rather than positioning both the first control valve 1012 and the second control valve 1022 adjacent to the same end of the accumulator-separator 402, as shown in FIG. 8, it may be advantageous to position the first control valve 1012 adjacent to a first end of the accumulator-separator 402 and to position the second control valve 1022 adjacent to a second and opposite end of the accumulator-separator 402. The first control valve 1012 and the second control valve 1022 are illustrated as positioned within the interior space 1008 of the housing 1006. However, in some implementations, the first control valve 1012 and/or the second control valve 1022 may be positioned outside of and adjacent to the housing 1006. The refrigerant 101 may be routed through the housing 1006 to accommodate the positioning of the first control valve 1012 adjacent to the first end of the accumulator-separator 402 and the second control valve 1022 adjacent to the second end of the accumulator-separator 402.

FIG. 12 is a schematic illustration of an integrated energy management unit 1105 of the refrigeration cycle thermal system 100, according to a ninth implementation. The integrated energy management unit 1105 is similar to the integrated energy management unit 1005 discussed herein, and includes the accumulator-separator 402, the internal heat exchanger 403, and the ejector 404 within the internal space 1108 of the housing 1106 as has been previously described. The integrated energy management unit 1105 also includes the gas cooler 410 that is adjacent to the external surface 1107 of the housing 1106. A first control valve 1112 is positioned adjacent to the first end of accumulator-separator 402 and is illustrated outside of the housing 1106. A second control valve 1122 is positioned adjacent to the second end of the accumulator-separator 402 and is also illustrated outside of the housing 1106. Each of the components of the integrated energy management unit 1105 (that is, the accumulator-separator 402, the internal heat exchanger 403, the ejector 404, the gas cooler 410, the first control valve 1112, and the second control valve 1122) are arranged and aligned with the axis A. The refrigerant 101 may be routed through the housing 1106 to accommodate the positioning of the first control valve 1012 adjacent to the first end of the accumulator-separator 402 and the second control valve 1022 adjacent to the second end of the accumulator-separator 402.

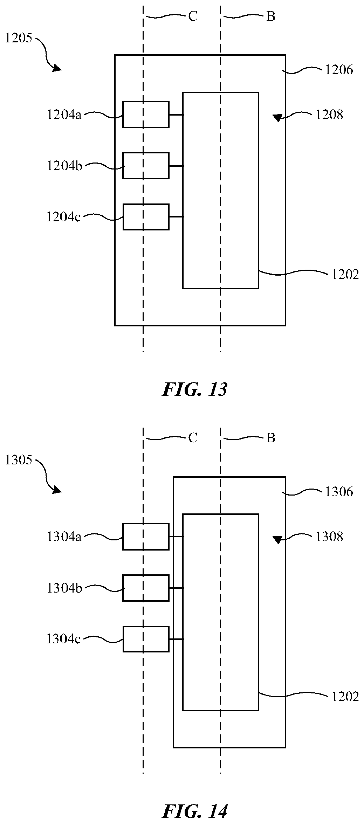

FIG. 13 is a schematic illustration of an integrated energy management unit 1205 of the refrigeration cycle thermal system 100, according to a tenth implementation. In this implementation, the integrated energy management unit 1205 includes a housing 1206 defining an internal space 1208. Positioned within the internal space 1208 of the housing 1206 is an accumulator-separator 1202. The accumulator-separator 1202 functions similarly to the accumulator-separator 102 as described herein. The accumulator-separator 1202 is aligned along a first axis B that extends through the housing 1206. In various implementations, the accumulator-separator 1202 is concentric about the first axis B that extends longitudinally through the housing 1206. The integrated energy management unit 1205 also includes a first ejector 1204a, a second ejector 1204b, and a third ejector 1204c. The first ejector 1204a, the second ejector 1204b, and the third ejector 1204c are each in fluid communication with the accumulator-separator 1202 and are configured to deliver the refrigerant 101 to the accumulator-separator 1202 as part of the function of the refrigeration cycle thermal system 100 and function similar to the ejector 104 as discussed herein. The inclusion of multiple ejectors within the integrated energy management unit 1205 can replace the actuator and valve configuration shown as the actuator 340 and the valve 342 with reference to FIG. 4. Rather than using continuous needle control, a binary "check valve"-type control using, for example, a solenoid, can be used to control flow through the multiple ejectors.

The first ejector 1204a, the second ejector 1204b, and the third ejector 1204c are positioned adjacent to the accumulator-separator 1202 within the housing 1206 and are arranged and aligned with a second axis C that extends through the housing 1206. In various implementations, the first ejector 1204a, the second ejector 1204b, and the third ejector 1204c are concentric about the second axis C that extends longitudinally through the housing 1206. The second axis C is generally parallel to the first axis B. In various implementations, the first ejector 1204a, the second ejector 1204b, and the third ejector 1204c are positioned about the second axis C that is parallel to the first axis B such that the first ejector 1204a, the second ejector 1204b, and the third ejector 1204c are positioned adjacent to the accumulator-separator within the housing 1206. The configuration shown in FIG. 13 illustrates a compact arrangement of multiple ejectors with a single accumulator-separator 1202. The illustrated configuration reduces the number of external refrigerant lines needed to connect the components.

The first ejector 1204a, the second ejector 1204b, and the third ejector 1204c may each have an associated controllable component, such as a valve and an actuator, similar to the actuator 340 and the valve 342 shown and discussed with reference to FIG. 4. Control of the controllable component of each of the first ejector 1204a, the second ejector 1204b, and the third ejector 1204c can be achieved with a control system, such as the control system 130 discussed with reference to FIG. 2 and as discussed herein. A square wave or other input may be used to sequentially control the first ejector 1204a, the second ejector 1204b, and the third ejector 1204c. In various implementations, the first ejector 1204a, the second ejector 1204b, and the third ejector 1204c are actuated together or separately, or in various combinations such that one or more of the ejectors are actuated simultaneously or in series. Each of the first ejector 1204a, the second ejector 1204b, and the third ejector 1204c may have an associated flow rate to accommodate a refrigeration cycle thermal system having multiple flow rates and multiple cooling paths.

While three ejectors are illustrated in FIG. 13, it is understood that this is exemplary and more or fewer ejectors could be arranged within the housing 1206 depending on the application and requirements of the refrigeration cycle thermal system 100. In other implementations, one or more ejectors could be positioned adjacent to the housing 1206.

While not specifically illustrated in FIGS. 4-13, it is understood that each configuration of the integrated energy management unit shown in the figures could include one or more sensors, similar to the first sensor 141, the second sensor 142, the third sensor 143, and the fourth sensor 144 shown in FIGS. 2 and 3. The sensors may be used to measure a temperature and/or pressure of the refrigerant 101 at various points and between various components of the integrated energy management unit and components to which the integrated energy management unit is coupled, such as the gas cooler 110 and the evaporator 114.

FIG. 14 is a schematic illustration of an integrated energy management unit 1305 of the refrigeration cycle thermal system 100, according to an eleventh implementation. In this implementation, the integrated energy management unit 1305 includes a housing 1306 defining an internal space 1308. Positioned within the internal space 1308 of the housing 1306 is the accumulator-separator 1202 as discussed herein. The accumulator-separator 1202 is aligned along a first axis B that extends through the housing 1306. In various implementations, the accumulator-separator 1202 is concentric about the first axis B that extends longitudinally through the housing 1306. Multiple ejectors, such as a first ejector 1304a, a second ejector 1304b, and a third ejector 1304c, are arranged adjacent to the housing 1306. The first ejector 1304a, a second ejector 1304b, and a third ejector 1304c are similar in function to the first ejector 1204a, the second ejector 1204b, and the third ejector 1204c discussed herein and may be controlled sequentially or serially as described herein.

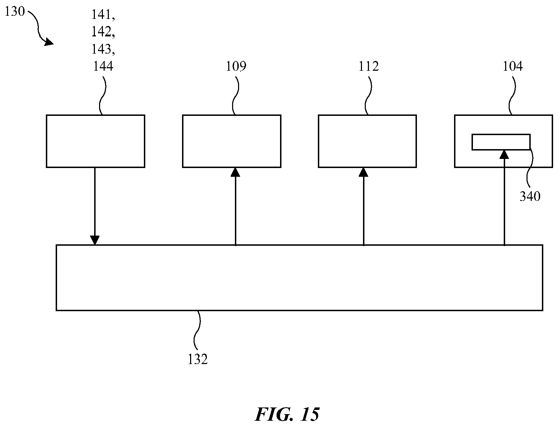

FIG. 15 is a schematic block diagram of the control system 130 for the refrigeration cycle thermal system 100, according to an implementation. The control system 130 can be used to control a controllable component of the refrigeration cycle thermal system 100 such as the actuator 340 and the valve 342 of the ejector 304, for example. The control system 130 can also be used to control other components of the refrigeration cycle thermal system 100.

The control system 130 includes a controller 132, which may be implemented in the form of a computing device that executes program instructions. The controller 132 receives input signals from sensors, such as the first sensor 141, the second sensor 142, the third sensor 143, and the fourth sensor 144, that are associated with the refrigeration cycle thermal system 100, determines control signals or commands for one or more components of the refrigeration cycle thermal system 100 using the input signals from the sensors, and transmits the control signals or commands to the one or more components of the refrigeration cycle thermal system 100 to operate the one or more components in accordance with the commands. The input signals from the sensors may represent measured values at various locations in the refrigeration cycle thermal system 100, such as temperature values, flow rate values, and pressure values. The input signals from the sensors are used, in some implementations, by the controller 132 to control various valves, such as the control valve 112, and the ejector(s), such as the ejector 104. The controller 132 may use other information for determining the commands, such as sensed values or commands from a system that is heated or cooled by the refrigeration cycle thermal system 100.

In the illustrated implementation, the controller 132 is configured to send commands to the compressor 109 to change an operating speed of the compressor, to the control valve 112 to change a degree of opening of the control valve 112, and to the actuator 340 (e.g., the controllable component) of the ejector 104 to change an operating characteristic of the ejector 104. As an example, the actuator 340 of the ejector 104 may be an electrically controlled actuator (e.g., an electric motor or a solenoid-operated pneumatic actuator) that is operable to change a position of a component of the ejector 104 in a manner that changes fluid flow characteristics through the ejector 104.

As described above, one aspect of the present technology is the gathering and use of data available from various sources for use in operating a refrigeration cycle thermal system. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores climate control preference related information that allows adjustment of operation of the refrigeration cycle thermal system. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for retaining preference information, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, climate control preference information may be determined each time the climate control system including the refrigeration cycle thermal system is used, such as by querying the user for a desired climate control setting and without subsequently storing the information or associating with the particular user.

## Claims

1. A vehicle thermal conditioning system, comprising:
a housing defining a housing cavity;
an accumulator-separator positioned within the housing cavity and configured to separate a gaseous phase from a liquid phase of a refrigerant, the accumulator-separator being in fluid communication with an external heat exchanger for exchanging heat between the refrigerant and a flow of air within a cabin of a vehicle;
an ejector positioned within the housing cavity and in fluid communication with the accumulator-separator and configured to lower a temperature or raise a pressure of the refrigerant; and
an internal heat exchanger positioned within the housing cavity and in fluid communication with the accumulator-separator, the internal heat exchanger configured to exchange heat between a flow of the refrigerant entering the internal heat exchanger and a flow of the refrigerant exiting the internal heat exchanger.

2. The vehicle thermal conditioning system of claim 1, wherein the ejector extends along a longitudinal axis and the accumulator-separator and the internal heat exchanger are arranged concentrically around the ejector.

3. The vehicle thermal conditioning system of claim 1, wherein the accumulator-separator is concentric about a first longitudinal axis of the housing and the ejector is positioned about a second longitudinal axis of the housing that is parallel to the first longitudinal axis such that the ejector is positioned adjacent to the accumulator-separator within the housing cavity.

4. The vehicle thermal conditioning system of claim 3, wherein the ejector is a first ejector and the vehicle thermal conditioning system includes a second ejector positioned within the housing cavity and in fluid communication with the accumulator-separator.

5. The vehicle thermal conditioning system of claim 1, wherein the accumulator-separator includes a separating component configured to allow vapor passthrough and not permit liquid passthrough.

6. The vehicle thermal conditioning system of claim 1, wherein the external heat exchanger is positioned around an exterior of the housing and in fluid communication with the accumulator-separator, the external heat exchanger configured to transfer heat from the refrigerant to another fluid.

7. The vehicle thermal conditioning system of claim 1, wherein the external heat exchanger is positioned adjacent to an end of the housing and in fluid communication with the accumulator-separator, the external heat exchanger configured to transfer heat from the refrigerant to another fluid.

8. The vehicle thermal conditioning system of claim 1, further comprising an actuator at least partially positioned within the housing, the actuator coupled with a valve configured to regulate a flow of the refrigerant through the ejector.

9. The vehicle thermal conditioning system of claim 1, further comprising a control valve positioned within the housing cavity and configured to regulate a flow of the liquid phase of the refrigerant from the accumulator-separator.

10. The vehicle thermal conditioning system of claim 1, further comprising a first control valve and a second control valve positioned within the housing cavity, wherein the first control valve is configured to regulate a first flow of the liquid phase of the refrigerant from the accumulator-separator to a first heat exchanger and the second control valve is configured to regulate a second flow of the liquid phase of the refrigerant from the accumulator-separator to a second heat exchanger.

11. The vehicle thermal conditioning system of claim 10, wherein the first heat exchanger is configured to operate as a gas cooler.

12. The vehicle thermal conditioning system of claim 10, wherein the first heat exchanger is configured to operate as a condenser.

13. The vehicle thermal conditioning system of claim 1, wherein the internal heat exchanger is positioned adjacent to an end of the housing.

14. The vehicle thermal conditioning system of claim 1, wherein the accumulator-separator, the ejector, and the internal heat exchanger are concentrically arranged within the housing cavity around an axis of the housing cavity extending between a first end of the housing cavity and a second end of the housing cavity.

15. The vehicle thermal conditioning system of claim 1, wherein the ejector includes a first ejector and a second ejector is positioned adjacent to the housing cavity.
